# EUROPEAN PATENT SPECIFICATION

(11) **EP 2 569 538 B1**
(45) Date of publication and mention of the grant of the patent: **02.07.2014**
(21) Application number: 11731062.3
(22) Date of filing: 13.05.2011
(51) Int. Cl.: F03G 7/08

(54) **PIEZO-ELECTROMECHANICAL DEVICE FOR RECOVERING ENERGY FROM VEHICLE TRANSIT**
PIEZIELEKTROMECHANISCHE VORRICHTUNG ZUR RÜCKGEWINNUNG VON ENERGIE AUS FAHRZEUGTRANSIT
DISPOSITIF PIÉZO-ÉLECTROMÉCANIQUE POUR RÉCUPÉRER L'ÉNERGIE DU TRANSIT DE VÉHICULES

(30) Priority: 13.05.2010 IT RM20100244
(43) Date of publication of application: 20.03.2013
(73) Proprietor: Universita' Degli Studi Roma Tre, 00154 Roma (IT)
(72) Inventor: SALVINI, Alessandro, I-00154 Roma (IT); RIGANTI FULGINEI, Francesco, I-00154 Roma (IT); ALTOMONTE, Daniele, I-00154 Roma (IT)
(74) Representative: Bergadano, Mirko
(86) International application number: PCT/IB2011/001033
(87) International publication number: WO 2011/141812

(56) References cited:
- EP-A1- 1 796 251
- WO-A1-2008/127823
- DE-A1- 19 929 341
- FR-A1- 2 872 868

## Description

### TECHNICAL FIELD

The present invention relates to recovering energy from the passage of vehicles by means of a Piezo-ElectroMechanical (PEM) device.

In particular, the present invention finds advantageous, but not exclusive, application in recovering energy from vehicle transit on urban/suburban/private roads, motorways, etc.

### BACKGROUND ART

As is known, various development activities currently exist for systems able to exploit the transit of vehicles for producing electrical energy.

For example, experiments are about to be carried out in Israel on certain roads with the laying of new road surfaces containing piezoelectric crystals, each of which is able to generate a potential difference, i.e. an electric voltage, when deformed by the wheels of a car and/or truck. In practice, on each passage of a vehicle, the individual piezoelectric crystals behave like tiny electricity generators. By using a piezoelectric road surface, the potential energy of the vehicles in transit is recovered. It is estimated that a kilometre of a road with a piezoelectric surface could produce up to *400 kW* of electrical energy.

In addition, international patent application WO2004067850 describes a road ramp based on dynamo-flywheel technology that is able to convert the kinetic energy of vehicles in transit into electrical energy.

Furthermore, also power generating devices for generating eleclric power in a rotating system, such as a wheel including a tire, are currently known. For example, European patent application EP 1 796 251 A1 discloses a power generating device, which has a predetermined rotating shaft in a direction different from the direction of gravity, which is provided in a rotating body rotating at a predetermined period about the rotating shaft, which generates electric power while rotating about the rotating shaft, and which comprises: a flexible beam which is fixed to a substrate; a weight which is supported by the beam and the position of which is fluctuated in synchronization with the period of the rotation by deflection of the beam caused in accordance with the rotation; and AC generating means which generates AC power synchronized with the period of the rotation by the fluctuation of the weight. In particular, according to EP 1 796 251 A1, the AC generating means are constituted by using a permanent magnet and a coil, or by using a piezoelectric element.

The Applicant has conducted in-depth research aimed at investigating the possibility of developing an innovative device able to recover both kinetic energy and potential energy from vehicles in transit.

### DISCLOSURE OF INVENTION

The object of the present invention is therefore that of providing a device capable of recovering both the kinetic energy and the potential energy of vehicles in transit.

The above object is achieved by the present invention insofar as it relates to a device for recovering energy from the transit of vehicles, as defined in the attached claims.

In particular, the present invention relates to a device for recovering energy from the transit of vehicles destined to be arranged on a road surface of a road suitable for the transit of vehicles.

In detail, the device according to the present invention comprises:
- a magnetic element generating a magnetic field;
- a coil comprising metal windings defining a hollow configured to receive the magnetic element;
- piezoelectric means; and
- mechanical means configured to, when a vehicle transits on the device,
   - insert the magnetic element in the hollow of the coil so as to produce a first variation of a magnetic flux linked with the windings of the coil such as to induce a first electric voltage on the coil, and
   - transfer at least partially a weight force of said vehicle onto the piezoelectric means so as to deform them.

The above-mentioned piezoelectric means are configured to generate at least a second electric voltage when they are deformed.

### BRIEF DESCRIPTION OF THE DRAWINGS

For a better understanding of the present invention, some preferred embodiments, provided by way of non-limitative example, will now be described with reference to the accompanying drawings (not to scale), where:
- Figure 1 shows a top view of a device for recovering energy from the transit of vehicles according to a preferred embodiment of the present invention;
- Figure 2 shows a first cross-sectional view of the device shown in Figure 1; and
- Figure 3 shows a second cross-sectional view of a portion of the device shown in Figure 1.

### BEST MODE FOR CARRYING OUT THE INVENTION

The following description is provided to enable an expert in the field to implement and use invention. Various modifications to the embodiments presented will be immediately obvious to an expert and the generic principles explained herein could be applied to other embodiments and applications without however leaving the scope of protection of the present invention.

Hence, the present invention should not be intended as limited to just the embodiments described and shown herein, but given the broadest scope of protection consistent with the principles and characteristics presented herein and defined in the attached claims.

The present invention relates to a Piezo-Electromechanical (PEM) device for recovering energy from the transit of vehicles suitable for being installed on a road surface. In the following, for simplicity of description and without loss of generality, the PEM device according to the present invention is described in relation to its use on a generic road, on the understanding that the PEM device could be used on any type of road, such as for example an urban/suburban/private road, a motorway, etc.

In particular, the PEM device comprises electromechanical means to recover kinetic energy from vehicles that pass over it and piezoelectric means to recover potential energy from vehicles that pass over it.

In detail, the PEM device exploits the compression and subsequent release brought about by a wheel of a vehicle in transit to insert/extract one or more permanent magnets, integral with the road surface, in/from metal coils so as to create induced electromotive forces that can be exploited to generate electrical energy.

In addition, the PEM device comprises a layer of piezoelectric material that enables the potential energy of a vehicle that transits on the PEM device to be collected.

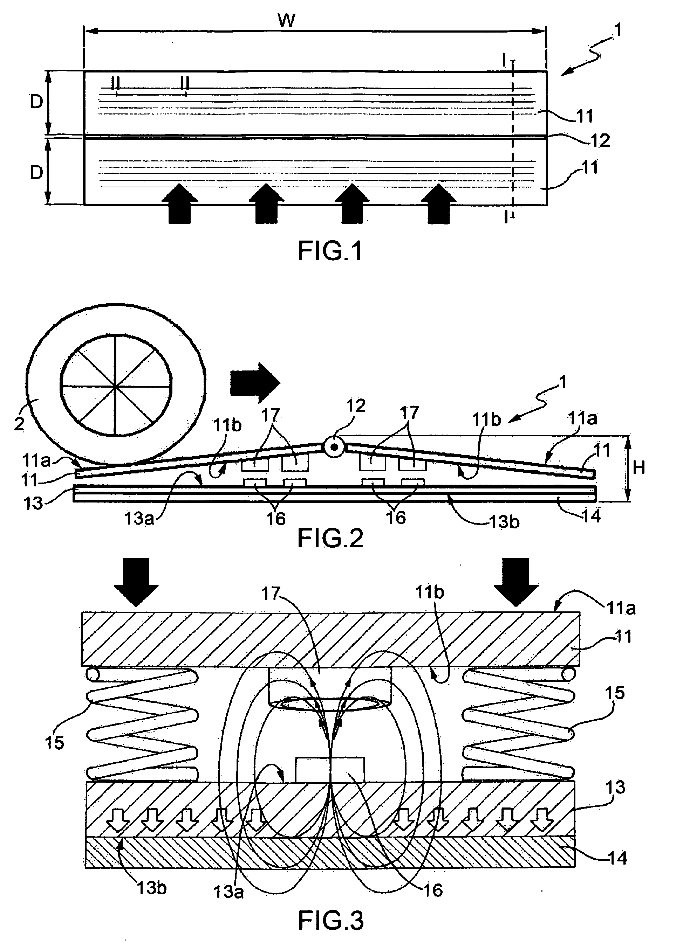

Figure 1 shows a top view of a PEM device 1 according to a preferred embodiment of the present invention.

In particular, as shown in Figure 1, the PEM device 1 comprises an upper structure that, in turn, comprises a pair of rigid upper platforms 11 having, in plan, substantially the same rectangular shape and the same dimensions that comprise, for both upper platforms 11, a same depth D and a same width W, substantially greater than the depth D.

Furthermore, always as shown in Figure 1, the two upper platforms 11 are side by side, or rather, in plan, are symmetrically arranged with respect to an axis of symmetry parallel to longer sides of both the upper platforms 11, and are mutually coupled by means of a sliding system 12 arranged in correspondence to said axis of symmetry and coupled to the two longer sides of the upper platforms 11 that are closest to said axis of symmetry. Said sliding system 12 is configured to enable compression of the upper platforms 11 whilst maintaining alignment and can conveniently be a mechanical system, basically obtained with the aid of small guides.

In use, the PEM device 1 is arranged on a road surface of a road (not shown in Figure 1) such that the longer sides of the two upper platforms 11 are arranged orthogonally with respect to the direction of traffic on the road (the direction of traffic in Figure 1 is indicated by several black arrows), i.e. such that the axis of symmetry of the upper platforms 11 is orthogonal to the direction of traffic on the road.

Figure 2 shows a first cross-sectional view of the PEM device 1 along any straight line running between the shorter sides of the two upper platforms 11 and parallel to the direction of traffic on the road and to the shorter sides of the two upper platforms 11 and, in consequence, orthogonal to the axis of symmetry of the upper platforms 11 and to the longer sides of the upper platforms 11 (for clarity of illustration, an exemplary dashed segment I-I is shown in Figure 1 along which it is possible to obtain the first cross-sectional view shown in Figure 2). In Figure 2, a black arrow again indicates the direction of traffic on the road.

In particular, as shown in Figure 2, the PEM device 1 also comprises a lower structure, which extends below the upper structure and comprises a rigid lower platform 13 and a layer of piezoelectric material 14, which extends beneath said lower platform 13.

Furthermore, always as shown in Figure 2, each upper platform 11 has a respective upper surface 11a over which, in use, a wheel 2 (or a pair of wheels) of a vehicle in transit can pass and a respective lower surface 11b that faces the lower structure and the lower platform 13 in particular. Said lower platform 13 has an upper surface 13a that faces the lower surfaces 11b of the two upper platforms 11 and a lower surface 13b that extends over said layer of piezoelectric material 14, i.e. it is covered by said layer of piezoelectric material 14.

In use, the PEM device 1 is fixed on the road surface such that the lower structure is integral with the underlying road surface and such that the layer of piezoelectric material 14 is in between the road surface and the lower platform 13.

The position of the upper structure with respect to the lower structure shown in Figure 2, henceforth called the rest position for simplicity of description, is assumed by the PEM device 1 when it is not compressed by the wheel 2.

In detail, as shown in Figure 2, in the rest position, i.e. when the PEM device 1 is not compressed by the wheel 2, the upper platforms 11 are raised with respect to the lower platform 13 and the PEM device 1 has a first height H (henceforth called the rest height) that is orthogonal to the lower platform 13 and is included between an upper end of the sliding system 12 and the road surface on which the PEM device 1 is placed.

Preferably, the upper structure is coupled to the lower structure along the longer sides of the upper platforms 11 that are furthest away from the sliding system 12 (feature not shown in Figure 2).

In particular, the upper structure is coupled to the lower structure such that its position can be varied with respect to said lower structure, in detail such that it can assume both the rest position shown in Figure 2 and a compression position where the PEM device 1 has a second height *H*' (henceforth called the compression height) lower than the rest height *H* and where the upper platforms 11 are consequently closer to the lower platform 13 with respect to the rest position, said compression position being assumed when the PEM device 1 is compressed by the wheel 2.

Figure 3 shows a second cross-sectional view of the PEM device 1, in particular of a portion of the PEM device 1, along any segment running between the respective longer sides of one of the upper platforms 11 and parallel to the axis of symmetry of the upper platforms 11 and to the longer sides of the upper platforms 11 and, in consequence, orthogonal to the direction of traffic on the road and to the shorter sides of the two upper platforms 11 (for clarity of illustration, an exemplary dashed segment *II-II* is shown in Figure 1 along which it is possible to obtain the second cross-sectional view shown in Figure 3).

In particular, the portion of the PEM device 1 shown in Figure 3 comprises a portion of one of the upper platforms 11, a portion of the lower platform 13, a portion of the layer of piezoelectric material 14 and a pair of dampers, or coil springs, 15 inserted between the upper platform 11 and the lower platform 13, in particular between the lower surface 11b of the upper platform 11 and the upper surface 13a of the lower platform 13.

In addition, Figure 3 also shows a permanent magnet 16 fixed to the upper surface 13a of the lower platform 13 and a coil, or solenoid, 17 that is fixed to the lower surface 11b of the upper platform 11 in correspondence to the permanent magnet 16 and is composed of helical windings made of metal, for example copper, internally defining a hollow destined to receive the permanent magnet 16.

In detail, always with reference to Figure 3, in the rest position, i.e. when the PEM device 1 is not compressed by a wheel of a vehicle, the coil 17 is raised with respect to the permanent magnet 16, while in the compression position, i.e. when the PEM device 1 is compressed by a wheel of a vehicle in transit, the permanent magnet 16 is inserted inside the coil 17, in particular in the hollow of the coil 17.

In addition, for clarity of illustration, the following are also shown in Figure 3:
- various ellipses that represent the lines of the magnetic field generated by the permanent magnet 16;
- two black arrows that represent the force exerted on the upper surface 11a of the upper platform 11 by a wheel of a vehicle that transits on the PEM device 1 and which causes the compression of the upper platform 11; and
- several white arrows that represent the force exerted by the lower platform 13 on the underlying layer of piezoelectric material 13 when a vehicle is on top of the PEM device 1.

Thus, based on what has been previously described and illustrated in Figures 1, 2 and 3, the lower structure is fixed on the underlying road surface such that it cannot move, while the upper structure, when compressed and then released by an external prime-mover, for example by a wheel of a vehicle in transit, is able to oscillate with respect to the lower structure thanks to the elastic action of the dampers 15.

In particular, in the absence of external stimuli, i.e. when the upper structure is not compressed by any vehicle, the dampers 15 maintain the upper structure in the rest position. Instead, when the upper structure previously compressed by a wheel of a vehicle in transit is no longer subjected to any compression (for example, because the wheel of the vehicle in transit has by this time gone beyond the PEM device 1), the dampers 15 return said upper structure to the rest position.

However, with respect to that shown in Figure 3 regarding a single portion of the PEM device 1, the upper surface 13a of the lower platform 13 preferably has a respective array of permanent magnets 16 fixed to it, these magnets being sufficiently spaced out from one another to consider mutual interactions between the respectively generated magnetic fields as being negligible.

Furthermore, again with respect to that shown in Figure 3 regarding a single portion of the PEM device 1, the lower surface 11b of each upper platform 11 preferably has an array of coils, or solenoids, 17 fixed to it, each one made by winding an adequate number of metal windings around a respective, internally hollow bobbin. In particular, for each permanent magnet 16 there is a respective coil 17.

At the moment of compression of the upper structure brought about by a wheel of a vehicle in transit, each permanent magnet 16 is mechanically forced to enter the respective coil 17 so as to create a variation in the magnetic flux linked with the windings of the respective coil 17. In this way, an induced electric voltage is produced at the terminals of each coil 17 in accordance with the known Faraday-Neumann-Lenz law of induction.

The moment that the wheel of the vehicle leaves the upper structure, each permanent magnet 16 is mechanically forced to emerge from the respective coil 17 thanks to the elastic reaction of the dampers 15. In this way, an opposite variation is created in the magnetic fluxes linked to the windings of the coils 17 and therefore an induced electric voltage is produced at the terminals of each coil 17 that is opposite to that produced from the insertion of the respective permanent magnet 16 in the coil 17.

The coils 17 are preferably connected electrically in series with each other so that the resultant electric voltage at the terminals of said electrical series is the sum of the induced electric voltages at the terminals of all the coils 17. Said resultant electric voltage, induced by the compression and release of the PEM device 1 caused by the passage of a wheel of a vehicle, is an electric voltage formed by a positive pulse created by the compression and a successive negative pulse created by the release.

Therefore, the electromechanical means of the PEM device 1, i.e. the upper structure, the lower platform 13, the dampers 15, the permanent magnets 16 and the coils 17, enable recovery of the kinetic energy lost by a vehicle in transit due to the impact with the same PEM device 1 (change in momentum).

In addition, the layer of piezoelectric material 14 enables the potential energy (due to the weight force) of a vehicle in transit to be absorbed and converted into electrical energy, and in particular enables recovery of the mechanical energy linked to the compression of the same layer of piezoelectric material 14.

In fact, once the permanent magnets 16 have been completely inserted in the coils 17, the weight force (potential energy) of a vehicle in transit on the PEM device 1 exerts pressure directly on the layer of piezoelectric material 14 through the upper structure, the dampers 15 and the lower platform 13. In this way, when the PEM device 1 is compressed by a wheel of a vehicle in transit, the layer of piezoelectric material 14 absorbs part of the end-stop impact of the upper structure and the dampers 15 transforming it into electrical energy.

In particular, the pressure exerted, through the upper structure, the dampers 15 and the lower platform 13, on the layer of piezoelectric material 14 by the weight force of a vehicle in transit on the PEM device 1 deforms said layer of piezoelectric material 14, which then generates one or more electric voltages.

Thus, the PEM device 1 is able to recover both the kinetic energy of a vehicle in transit, thanks to the electromechanical means, and the potential energy of the vehicle in transit, thanks to the layer of piezoelectric material 14.

Finally, the PEM device 1 preferably also comprises an electronic dual half-wave rectifying system, known as a Graetz bridge, with a smoothing capacitor.

In particular, said electronic dual half-wave rectifying system with a smoothing capacitor is connected to the terminals of the electrical series of coils 17 and is configured to acquire and rectify the resultant electric voltage present at the terminals of the electrical series of coils 17.

In addition, said electronic dual half-wave rectifying system with a smoothing capacitor is also connected to the layer of piezoelectric material 14 and is configured to acquire the electric voltages generated by the latter and to supply a final electric voltage in output that is the sum of said electric voltages generated by the layer of piezoelectric material 14 and the resultant electric voltage acquired at the terminals of the electrical series of coils 17 and rectified.

Lastly, the final voltage provided in output from the electronic dual half-wave rectifying system with a smoothing capacitor can be expediently sent to one or more batteries, or rather buffer batteries, for storing the electrical energy produced. An electronic device of inverter-type can also be connected to the batteries to provide an output of an alternating electric voltage at the grid frequency (*50 Hz*).

The Applicant has carried out various experimental simulations in the MATLAB® environment aimed at evaluating the performance, efficiency and costs of the PEM device according to the present invention.

The characteristics of a specific simulated PEM device in one of said experimental simulations performed in the MATLAB® environment are presented below, by way of non-limitative example.

In particular,
- the specific simulated PEM device is used as speed bump on a road with a speed limit of *30 km*/*h*;
- the specific simulated PEM device has a rest height *H* of 7 *cm* (maximum allowed for speed bumps in areas limited to *30 km*/*h),* crossways it is *2.65 m* wide (i.e. the width W of the upper platforms 11 is *2.65 m*) and it has a depth of *50 cm* in the direction of travel of vehicles (i.e. the depth of the specific simulated PEM device, which is the sum of the depths *D* of both upper platforms 11 and the depth of the sliding system 12, is *50 cm*);
- the upper platforms 11 and the lower platform 13 of the specific simulated PEM device are in carbon fibre, which is a non-magnetic material and able to resist the weight of the vehicles, and has a total cost of approximately *1000 euro* (this total cost regards the purchase of a single unit; this total cost would drop adequately in the case of large-scale industrial production of the PEM device);
- the specific simulated PEM device comprises twenty four permanent disc magnets 16 integral with the road surface, each with a diameter of *20 cm,* a height of *2 cm,* residual induction of *1.4 Tesla* and a cost of approximately *300 euro*;
- the specific simulated PEM device comprises twenty four coils 17 (i.e. one for each permanent magnet 16 as previously described), each made of copper and *2 cm* high;
- a downward velocity of the upper structure of the specific simulated PEM device was assumed such as to complete the entire immersion of the permanent magnets 16 inside the coils 17 in *2.5 ms*;
- when compressed by a wheel of a vehicle in transit, the upper structure of the specific simulated PEM device is lowered by *3 cm*, i.e. the specific simulated PEM device has a compression height *H*' of *4 cm* in the compression position (in the absence of compression, the permanent magnets 16 are considered to be at a distance of *1 cm* from the coils 17);
- the voltage *Vᵢ* induced on the coils 17 is approximately *70* V pulsed and was simulated as a force *rect* lasting Δ*t* equal to *2.5 ms* (first approximation assumption);
- the circuit of the equivalent electrical model used is a forced *R-L-C* series, as previously stated, of the function *Vi·rect_{Δt}(t - Δt*/*2),* where the resistance *R* takes into account the resistivity of the copper and the geometry with which the coils 17 are made, the inductance *L* takes into account the inductance returned by the magnetic circuit that regards the permanent magnets 16, while the capacity C takes into account the equivalent capacity of a *270 mF* capacitor that is provided as the first accumulator of electrical energy; in particular, as the device is designed so that the resistance is subcritical, it was possible to exploit the dampened oscillatory progress of the response (voltage at the terminals of the capacitor) that, for the time that the force impulse lasts, gives rise to a natural overvoltage on the capacitor (obviously to definitely guarantee exploitation of the single positive half-wave, an opportune series diode will be provided); in this way, the capacitor can charge at a value of approximately *120 V* (hence, by exploiting the transitory, the electromotive force (EMF) can be raised without using step-up transformers); the retail cost of a capacitor for these purposes is approximately *10 euro* per Farad;
- from the simulation carried out, it emerges that the capacitor is able to charge itself with approximately *2000 Joules* of energy on each compression (obviously the passage of a vehicle produces two compressions);
- the energy in the capacitor is transferred, much more slowly with respect to the initial storage times, to a battery or, in alternative, to an inverter-type device by means of an electronic circuit known as a DC/DC stabilizer and commercially available with a retail cost of approximately *200 euro;*
- the energy discharged on each compression is approximate *1977 Joules* (the fact that not all of the energy first accumulated on the capacitor is supplied to the battery is due to the fact that the capacitor does not discharge to zero voltage, but to the minimum input voltage of the battery, for example *12 V*);
- assuming an urban traffic flow of approximately *13,000* cars per day (a values considered average for large urban centres), the specific simulated PEM device can produce *51,402 MegaJoules* of electrical energy;
- assuming that the accumulation device is able to smoothly return in *24 hours* all of the energy provided by the specific simulated PEM device, approximately *600 W* will be available;
- in conclusion, the specific simulated PEM device costs approximately *9500 euro* for making a single unit (in the case of industrial production, this cost can presumably be reduced to about a thousand euro) and, considering that *1 kWh* currently costs approximately *0.13582 euro,* the specific simulated PEM device would have its cost amortized in one or two years at most.

The example just described regards the particular case of a PEM device according to the present invention used as a speed bump on a road with a speed limit of *30 km*/*h.* Obviously the PEM device according to the present invention could also be used as a speed bump on roads with speed limits of *40 km*/*h* and/or *50 km*/*h.*

The advantages of the present invention can be immediately understood from the previous description.

In particular, the PEM device according to the present invention can be used as a replacement for all speed bumps currently installed on the roads, with all the associated economic advantages that this replacement entails.

Moreover, as well as permitting a significant part of the energy that would otherwise be lost in the impact with the hump and in the braking system of the vehicle to be recovered, the PEM device according to the present invention is also easily adapted to carry out the role of a sensor for monitoring traffic flow and to optimize traffic light control.

On the other hand, the PEM device according to the present invention does not need special installation work that requires particular excavations below the road surface. In fact, installation of the proposed PEM device on the road is very simple and does not require much time, whether for installation or possible removal, thereby limiting inconveniences to traffic during the works.

It should also be noted that the PEM device according to the present invention can be assembled at sites (production factories) far away from the place of installation and then subsequently installed by the road authorities.

Finally, it is understood that various modifications may be made to the present invention, all falling within the scope of protection of the invention defined in the attached claims.

## Claims

1. A device (1) for recovering energy from vehicle transit, which is intended to be arranged on a road surface of a road for vehicle transit, and which comprises piezoelectric means (14);
**characterized by** further comprising:
• a magnetic element (16) generating a magnetic field;
• a coil (17) comprising metal windings defining a hollow configured to receive the magnetic element (16); and
• mechanical means configured to, when a vehicle transits on the device (1),
- insert the magnetic element (16) in the hollow of the coil (17) so as to produce a first variation of a magnetic flux linked with the windings of the coil (17) such as to induce a first electric voltage on the coil (17), and
- transfer at least partially a weight force of said vehicle on the piezoelectric means (14) so as to deform them, wherein said piezoelectric means (14) are configured to generate at least one second electric voltage when they are deformed.

2. The device of claim 1, comprising:
• a plurality of magnetic elements (16) each generating a respective magnetic field;
• for each magnetic element (16), a corresponding coil (17) comprising metal windings defining a hollow configured to receive said magnetic element (16);
said mechanical means being configured to, when a vehicle transits on the device (1), insert each magnetic element (16) in the hollow of the corresponding coil (17) so as to produce a respective first variation of a magnetic flux linked with the windings of the corresponding coil (17) such as to induce a respective first electric voltage on the corresponding coil (17).

3. The device according to claim 1 or 2, wherein said mechanical means are also configured to, after a vehicle transits on the device (1), extract each magnetic element (16) from the hollow of the corresponding coil (17) so as to produce a respective second variation of the magnetic flux linked with the windings of the corresponding coil (17) such as to induce a respective third electric voltage on the corresponding coil (17).

4. The device of claim 3, wherein, for each coil (17), the respective third induced electric voltage is opposite to the respective first induced electric voltage.

5. The device according to claim 3 or 4, wherein said mechanical means comprise:
• a lower structure that comprises said piezoelectric means (14), which is intended to be fixed on the road surface and to which each magnetic element (16) is fixed;
• an upper structure which is intended for a vehicle to transit thereupon and to which each coil (17) is fixed; and
• elastic means (15) interposed between the upper structure and the lower structure and configured to,
- when a vehicle transits on the upper structure, allow the upper structure to approach the lower structure under the action of a force exerted by the vehicle so that each magnetic element (16) is inserted in the hollow of the corresponding coil (17),
- when a vehicle transits on the upper structure, transfer at least part of the weight force of said vehicle acting on the upper structure on the lower structure so that the piezoelectric means (14) are deformed,
- after a vehicle has transited on the upper structure, move the upper structure away from the lower structure so that each magnetic element (16) is extracted from the hollow of the corresponding coil (17), and
- when no vehicle transits on the upper structure, maintain the upper structure at a given distance from the lower structure, said given distance being such that no magnetic element (16) results inserted in the hollow of the corresponding coil (17).

6. The device of claim 5, wherein said piezoelectric means consist of a layer of piezoelectric material (14); wherein said upper structure has an upper surface (11a) intended for a vehicle to transit thereupon and a lower surface (11b) to which each coil (17) is fixed;
wherein said lower structure comprises a lower platform (13) that has an upper surface (13a) facing the lower surface (11b) of the upper structure and a lower surface (13b) covered by said layer of piezoelectric material (14), said lower structure being intended to be fixed on the road surface so that said layer of piezoelectric material (14) is comprised between said lower platform (13) and said road surface;
and wherein said elastic means (15) are interposed between the lower surface (11b) of the upper structure and the upper surface (13a) of the lower platform (13).

7. The device of claim 6, wherein each magnetic element (16) is fixed on the upper surface (13a) of the lower platform (13) in a respective first position;
and wherein each coil (17) is fixed on the lower surface (11b) of the upper structure in a respective second position such that, when the upper structure approaches the lower platform (13) under the action of the force exerted by the vehicle, the corresponding magnetic element (16) fixed in the respective first position on the upper surface (13a) of the lower platform (13) is inserted in the hollow of said coil (17).

8. The device according to claim 6 or 7, wherein said lower platform (13) is made of carbon fibre.

9. The device according to any claim 5-8, wherein said upper structure comprises two upper platforms (11) mutually coupled by means of a sliding system (12).

10. The device of claim 9, wherein each upper platform (11) is made of carbon fibre.

11. The device according to any claim 5-10, wherein said elastic means (15) comprise at least one damper or spring.

12. The device according to any claim 3-11, further comprising a dual half-wave rectifier electronic system with smoothing capacitor configured to:
- acquire the respective first electric voltage induced on each coil (17);
- acquire and rectify the respective third electric voltage induced on each coil (17);
- acquire the second electric voltage generated by the piezoelectric means (14);
- provide an output voltage obtained by adding up each first electric voltage acquired, each third electric voltage acquired and rectified, and the second electric voltage acquired.

13. The device of claim 12, further comprising an accumulator coupled to said dual half-wave rectifier electronic system with smoothing capacitor; said accumulator being configured to:
- acquire said output voltage from said dual half-wave rectifier electronic system with smoothing capacitor; and
- store said acquired output voltage.

14. The device according to any preceding claim, wherein the windings of each coil (17) are made of copper.

15. The device according to any preceding claim, wherein each magnetic element (16) is a permanent magnet.

## Patentansprüche

1. Vorrichtung (1) zum Rückgewinnen von Energie aus einer Fahrzeugvorbeifahrt, die auf einer Fahrbahnoberfläche einer Fahrbahn für die Fahrbahndurchfahrt anzuordnen ist und die piezoelektrische Mittel (14) enthält;
**dadurch gekennzeichnet, dass** sie ferner umfasst:
ein magnetisches Element (16), das ein Magnetfeld erzeugt;
eine Spule (17), die Metallwindungen enthält, die einen Hohlraum defixieren, der konfiguriert ist, das magnetische Element (16) aufzunehmen; und
mechanische Mittel, die konfiguriert sind, dann, wenn ein Fahrzeug an der Vorrichtung (1) vorbeifährt,
das magnetische Element (16) in den Hohlraum der Spule (17) hinein zu bewegen, um eine erste Veränderung eines magnetischen Flusses,
der mit den Windungen der Spule (17) in Verbindung steht, zu erzeugen, um so eine erste elektrische Spannung in der Spule (17) zu induzieren, und
eine Gewichtskraft des Fahrzeugs wenigstens teilweise auf die piezoelektrischen Mittel (14) zu übertrageil, um sie zu verformen, wobei die piezoelektrischen Mittel (14) konfiguriert sind, wenigstens eine zweite elektrische Spannung zu erzeugen, wenn sie verformt werden.

2. Vorrichtung nach Anspruch 1, die umfasst:
mehrere magnetische Elemente (16), wovon jedes ein entsprechendes magnetisches Feld erzeugt;
für jedes magnetische Element (16) eine entsprechende Spule (17), die Metallwindungen enthält, die einen Hohlraum definieren, der konfiguriert ist, das magnetische Element (16) aufzunehmen;
wobei die mechanischen Mittel konfiguriert sind, dann, wenn ein Fahrzeug an der Vorrichtung (1) vorbeifährt, jedes magnetische Element (16) in den Hohlraum der entsprechenden Spule (17) hinein zu bewegen, um so eine entsprechende erste Veränderung eines magnetischen Flusses, die mit den Windungen der entsprechenden Spule (17) in Beziehung steht, zu erzeugen, derart, dass eine entsprechende erste elektrische Spannung an der entsprechenden Spule (17) induziert wird.

3. Vorrichtung nach Anspruch 1 oder 2, wobei die mechanischen Mittel außerdem konfiguriert sind, dann, wenn das Fahrzeug an der Vorrichtung (1) vorbeigefahren ist, jedes magnetische Element (16) aus dem Hohlraum der entsprechenden Spule (17) heraus zu bewegen, um so eine entsprechende zweite Veränderung des magnetischen Flusses, die mit den Windungen der entsprechenden Spule (17) in in Beziehung steht, zu erzeugen, derart, dass eine entsprechende dritte elektrische Spannung an der entsprechenden Spule (17) induziert wird.

4. Vorrichtung nach Anspruch 3, wobei für jede Spule (17) die entsprechende dritte induzierte elektrische Spannung zu der entsprechenden ersten induzierten elektrischen Spannung entgegengesetzt ist.

5. Vorrichtung nach Anspruch 3 oder 4, wobei die mechanischen Mittel umfassen:
eine untere Struktur, die die piezoelektrischen Mittel (14) enthält, die an der Fahrbahnoberfläche zu befestigen sind und an denen jedes magnetische Element (16) befestigt ist;
eine obere Struktur, die für ein Fahrzeug bestimmt ist, das darüber fährt, und an der jede Spule (17) befestigt ist; und
elastische Mittel (15), die zwischen die obere Struktur und die untere Struktur eingefügt sind und konfiguriert sind,
dann, wenn ein Fahrzeug über die obere Struktur fährt, der oberen Struktur zu ermöglichen, sich der unteren Struktur unter der Wirkung einer Kraft, die durch das Fahrzeug ausgeübt wird, anzunähern, so dass jedes magnetische Element (16) in den Hohlraum der entsprechenden Spule (17) hinein bewegt wird,
dann, wenn ein Fahrzeug über die obere Struktur fährt, wenigstens einen Teil der Gewichtskraft des Fahrzeugs, die auf die obere Struktur wirkt, auf die untere Struktur zu übertragen, so dass die piezoelektrischen Mittel (14) verformt werden,
dann, wenn ein Fahrzeug über die obere Struktur gefahren ist, die obere Struktur von der unteren Struktur weg zu bewegen, so dass jedes magnetische Element (16) aus dem Hohlraum der entsprechenden Spule (17) heraus bewegt wird, und
dann, wenn kein Fahrzeug über die obere Struktur fährt, die obere Struktur in einem gegebenen Abstand von der unteren Struktur zu halten, wobei der gegebene Abstand derart ist, dass kein magnetisches Element (16) in den Hohlraum der entsprechenden Spule (17) hinein bewegt wird.

6. Vorrichtung nach Anspruch 5, wobei die piezoelektrischen Mittel aus einer Schicht aus piezoelektrischem Material (14) bestehen;
wobei die obere Struktur eine obere Oberfläche (11a) besitzt, die dazu bestimmt ist, dass ein Fahrzeug darüber fährt, und eine untere Oberfläche (11b) besitzt, an der jede Spule (17) befestigt ist;
wobei die untere Struktur eine untere Plattform (13), die eine obere Oberfläche (13a), die der unteren Oberfläche (11b) der oberen Struktur zugewandt ist, und eine untere Obedläche (13b), die durch die Schicht aus piezoelektrischem Material (14) abgedeckt ist, umfasst, wobei die untere Struktur dazu bestimmt ist, an der Fahrbahnoberfläche befestigt zu werden, so dass die Schicht aus piezoelektrischem Material (14) zwischen der unteren Plattform (13) und der Fahrbahnoberfläche enthalten ist; und
wobei die elastischen Mittel (15) zwischen die untere Oberfläche (11b) der oberen Struktur und die obere Oberfläche (13a) der unteren Plattform (13) eingefügt sind.

7. Vorrichtung nach Anspruch 6, wobei jedes magnetische Element (16) an der oberen Oberfläche (13a) der unteren Plattform (13) an einer entsprechenden ersten Position befestigt ist; und
wobei jede Spule (17) an der unteren Oberfläche (11b) der oberen Struktur an einer entsprechenden zweiten Position befestigt ist, derart, dass dann, wenn die obere Struktur der unteren Plattform (13) unter der Wirkung der durch das Fahrzeug ausgeübten Kraft annähert, das entsprechende magnetische Element (16), das an der entsprechenden ersten Position an der oberen Oberfläche (13a) der unteren Plattform (13) befestigt ist, in den Hohlraum der Spule (17) hinein bewegt wird.

8. Vorrichtung nach Anspruch 6 oder 7, wobei die untere Plattform (13) aus Kohlenstofffasern hergestellt ist.

9. Vorrichtung nach der Ansprüche 5-8, wobei die obere Struktur zwei obere Plattformen (11) umfasst, die mittels eines Gleitsystems (12) miteinander gekoppelt sind.

10. Vorrichtung nach Anspruch 9, wobei jede obere Plattform (11) aus Kohlenstofffasern hergestellt ist.

11. Vorrichtung nach einem der Ansprüche 5-10, wobei die elastischen Mittel (15) wenigstens einen Dämpfer oder eine Feder umfassen.

12. Vorrichtung nach einem der Ansprüche 3-11, die ferner ein duales elektronisches System mit Halbwellengleichrichter und Glättungskondensator umfasst, das konfiguriert ist:
- die entsprechende erste elektrische Spannung, die an jeder Spule (17) induziert wird, zu erfassen;
- die entsprechende dritte elektrische Spannung, die an jeder Spule (17) induziert wird, zu erfassen und gleichzurichten;
- die zweite Spannung, die durch die piezoelektrischen Mittel (14) erzeugt wird, zu erfassen;
- eine Ausgangsspannung, die durch Addieren jeder erfassten elektrischen Spannung, jeder erfassten und gleichgerichteten dritten elektrischen Spannung und der erfassten zweiten elektrischen Spannung erhalten wird, bereitzustellen.

13. Vorrichtung nach Anspruch 12, die ferner einen Akkumulator umfasst, der mit dem dualen elektronischen System mit Halbwellengleichrichter und Glättungskondensator gekoppelt ist, wobei der Akkumulator konfiguriert ist:
- die Ausgangsspannung von dem duaten elektronischen System mit Halbwellengleichrichter und Glättungskondensator zu erfassen; und
- die erfasste Ausgangsspannung zu speichern.

14. Vorrichtung nach einem vorhergehenden Anspruch, wobei die Windungen jeder Spule (17) aus Kupfer hergestellt sind.

15. Vorrichtung nach einem vorhergehenden Anspruch, wobei jedes magnetisches Element (16) ein Permanentmagnet ist.

## Revendications

1. Dispositif (1) pour récupérer l'énergie du transit de véhicules destiné à être agencé sur une surface de route d'une route servant au transit de véhicules et qui comprend des moyens piézoélectriques (14) ;
**caractérisé en ce qu'**il comprend en outre :
• un élément magnétique (16) générant un champ magnétique ;
• une bobine (17) comprenant des bobinages en métal définissant un creux configuré pour recevoir l'élément magnétique (16) ; et
• des moyens mécaniques configurés, lorsqu'un véhicule transite sur le dispositif (1), pour :
- insérer l'élément magnétique (16) dans le creux de la bobine (17) de façon à produire une première variation d'un flux magnétique relié aux bobinages de la bobine (17) de façon à induire une première tension électrique sur la bobine (17) ; et
- transférer au moins en partie une force pondérale dudit véhicule sur les moyens piézoélectriques (14) de façon à les déformer, lesdits moyens piézoélectriques (14) étant configurés pour générer au moins une seconde tension électrique lorsqu'ils sont déformés.

2. Dispositif selon la revendication 1, comprenant :
• une pluralité d'éléments magnétiques (16) générant chacun un champ magnétique respectif ;
• pour chaque élément magnétique (16), une bobine (17) correspondante comprenant des bobinages en métal définissant un creux configuré pour recevoir ledit élément magnétique (16) ;
lesdits moyens mécaniques étant configurés, lorsqu'un véhicule transite sur le dispositif (1), pour insérer chaque élément magnétique (16) dans le creux de la bobine (17) correspondante de façon à produire une première variation respective d'un flux magnétique relié avec les bobinages de la bobine (17) correspondante de façon à induire une première tension électrique respective sur la bobine (17) correspondante.

3. Dispositif selon la revendication 1 ou 2, dans lequel lesdits moyens mécaniques sont également configurés, après qu'un véhicule a transité sur le dispositif (1), pour extraire chaque élément magnétique (16) hors du creux de la bobine (17) correspondante de façon à produire une seconde variation respective du flux magnétique relié avec les bobinages de la bobine (17) correspondante de façon à induire une troisième tension électrique respective sur la bobine (17) correspondante.

4. Dispositif selon la revendication 3, dans lequel, pour chaque bobine (17), la troisième tension électrique induite respective est opposée à la première tension électrique induite respective.

5. Dispositif selon la revendication 3 ou 4, dans lequel lesdits moyens mécaniques comprennent :
• une structure inférieure qui comprend lesdits moyens piézoélectriques (14) destinée à être fixée sur la surface de route et à laquelle chaque élément magnétique (16) est fixé ;
• une structure supérieure destinée à un véhicule passant sur elle et à laquelle chaque bobine (17) est fixée ; et
• des moyens élastiques (15) interposés entre la structure supérieure et la structure inférieure et configurés pour :
- lorsqu'un véhicule transite sur la structure supérieure, permettre à la structure supérieure d'approcher la structure inférieure sous l'action d'une force exercée par le véhicule de sorte que chaque élément magnétique (16) est inséré dans le creux de la bobine (17) correspondante ;
- lorsqu'un véhicule transite sur la structure supérieure, transférer au moins une partie de la force pondérale dudit véhicule agissant sur la structure supérieure sur la structure inférieure de sorte que les moyens piézoélectriques (14) sont déformés ;
- après qu'un véhicule a transité sur la structure supérieure, écarter la structure supérieure de la structure inférieure de sorte que chaque élément magnétique (16) est extrait hors du creux de la bobine (17) correspondante ; et
- lorsqu'aucun véhicule ne transite sur la structure supérieure, maintenir la structure supérieure à une distance donnée de la structure inférieure, ladite distance donnée étant telle qu'aucun élément magnétique (16) n'est inséré dans le creux de la bobine (17) correspondante.

6. Dispositif selon la revendication 5, dans lequel lesdits moyens piézoélectriques se composent d'un matériau de couche piézoélectrique (14) ;
dans lequel ladite structure supérieure a une surface supérieure (11a) destinée à un véhicule passant sur elle et une surface inférieure (11b) à laquelle chaque bobine (17) est fixée ; et
dans lequel ladite structure inférieure comprend une plateforme inférieure (13) ayant une surface supérieure (13a) faisant face à la surface inférieure (11b) de la structure supérieure et une surface inférieure (13b) recouverte par ledit matériau de couche piézoélectrique (14), ladite structure inférieure étant destinée à être fixée sur la surface de route de sorte que ledit matériau de couche piézoélectrique (14) est compris entre ladite plateforme inférieure (13) et ladite surface de route ; et
dans lequel lesdits moyens élastiques (15) sont interposés entre la surface inférieure (11b) de la structure supérieure et la surface supérieure (13a) de la plateforme inférieure (13).

7. Dispositif selon la revendication 6, dans lequel chaque élément magnétique (16) est fixé sur la surface supérieure (13a) de la plateforme inférieure (13) dans une première position respective ; et
dans lequel chaque bobine (17) est fixée sur la surface inférieure (11b) de la structure supérieure dans une seconde position respective de telle sorte que, lorsque la structure supérieure approche la plateforme inférieure (13) sous l'action de la force exercée par le véhicule, l'élément magnétique (16) correspondant fixé dans la première position respective sur la surface supérieure (13a) de la plateforme inférieure (13) est insérée dans le creux de ladite bobine (17).

8. Dispositif selon la revendication 6 ou 7, dans lequel ladite plateforme inférieure (13) est fabriquée à partir de fibre de carbone.

9. Dispositif selon n'importe laquelle des revendications 5 à 8, dans lequel ladite structure supérieure comprend deux plateformes supérieures (11) mutuellement couplées au moyen d'un système coulissant (12).

10. Dispositif selon la revendication 9, dans lequel chaque plateforme supérieure (11) est fabriquée à partir de fibre de carbone.

11. Dispositif selon n'importe laquelle des revendications 5 à 10, dans lequel lesdits moyens élastiques (15) comprennent au moins un amortisseur ou un ressort.

12. Dispositif selon n'importe laquelle des revendications 3 à 11, comprenant en outre un système électronique à double redresseur de demi-onde avec condensateur de filtrage configuré pour :
- acquérir la première tension électrique respective induite sur chaque bobine (17) ;
- acquérir et rectifier la troisième tension électrique respective induite sur chaque bobine (17) ;
- acquérir la seconde tension électrique générée par les moyens piézoélectriques (14) ;
- fournir une tension de sortie obtenue en ajoutant chaque première tension électrique acquise, chaque troisième tension électrique acquise et rectifiée et la seconde tension électrique acquise.

13. Dispositif selon la revendication 12, comprenant en outre un accumulateur couplé audit système électronique à double redresseur de demi-onde avec condensateur de filtrage ; ledit accumulateur étant configuré pour :
- acquérir ladite tension de sortie à partir dudit système électronique à double redresseur de demi-onde avec condensateur de filtrage ; et
- stocker ladite tension de sortie acquise.

14. Dispositif selon l'une quelconque des revendications précédentes, dans lequel les bobinages de chaque bobine (17) sont fabriqués à partir de cuivre.

15. Dispositif selon n'importe laquelle des revendications précédentes, dans lequel chaque élément magnétique (16) est un aimant permanent.
